# EUROPEAN PATENT SPECIFICATION

(11) **EP 3 386 091 B1**
(45) Date of publication and mention of the grant of the patent: **10.07.2019**
(21) Application number: 17164587.2
(22) Date of filing: 03.04.2017
(51) Int. Cl.: H02N 2/00, H02N 2/02, H02N 2/10

(54) **PIEZOELECTRIC VIBRATOR DEVICE AND PIEZOELECTRIC MOTOR**
PIEZOELEKTRISCHE VIBRATORVORRICHTUNG UND PIEZOELEKTRISCHER MOTOR
DISPOSITIF VIBRATEUR PIÉZOÉLECTRIQUE ET MOTEUR PIÉZOÉLECTRIQUE

(43) Date of publication of application: 10.10.2018
(73) Proprietor: Physik Instrumente (PI) GmbH & Co. KG, 76228 Karlsruhe (DE)
(72) Inventor: Koc, Burhanettin, 76275 Ettlingen (DE)
(74) Representative: Kruspig, Volkmar

(56) References cited:
- EP-A1- 3 089 348
- US-A1- 2010 033 057
- US-A1- 2011 227 453
- US-A1- 2016 020 712

## Description

The invention relates to a piezoelectric vibrator device and to piezoelectric motors.

Precise positioners in the order of several tens of nanometer resolutions are in demand for medical and biological research, such as in microscope stages and micro assembly units. Requirements from these positioners are not only obtaining a motion at high precision but also very wide range of moving speeds from 100 nanometers per second to one meter per second. The obvious solution is hybrid solution, i.e. providing one positioner for coarse motion and another one for precise motion. However, availability of space and requirement of many wires for electrical driving of actuators in moving stages make the system to be complex and costly. A linear motor with a wide range of moving speed and a capability to make motion steps in the order of several tens of nanometers could be useful for industrial and assembly technologies.

Resonance piezoelectric (or ultrasonic) motors are driven at resonance. The reason for an ultrasonic motor to be driven at a resonance frequency is that a suitable microscopic motion can only be excited at that particular resonance mode or modes at a small driving voltage. If a vibrating piezoelectric element in an ultrasonic motor has a bulk structure, to obtain a useful force and speed level, the vibrating piezoelectric element needs to be driven at several tens of volts. Further decreasing of driving voltage to several (3 to 5) volts can be possible when a piezoelectric element is manufactured in multilayer form. However, operating a multilayer element at a resonance frequency can be problematic. Relatively large vibration level could create a reliability problem such as piezoelectric layers can pill-off.

Holding a vibrating element in a resonance-drive-type piezoelectric motor has some challenges. There are contradictory conditions which can increases the complexity of a motor structure. Tight holding of a vibrating element in a motor case may suppress useful displacements or vibrations. At the same time, to generate enough vibration with sufficient magnitude, a vibrating element needs to move freely so that vibration on it can be transferred to a sliding or rotating element through frictional coupling. However, lose holding of a vibrating element could degrade positioning accuracy thus, cause hysteresis and backlash in a positioning device.

It is well known that piezoelectric coupling coefficient in thickness direction (d₃₃) is the largest and it is almost two times larger than the coupling coefficient in transverse direction (d₃₁).

US 2016/0020712 A1 and US 2010/0033057 A1 show vibrators with a continuous electrode on one main surface and two electrodes dividing the actuator in two equal portions on the other main surface, displacement being in the direction between the main surfaces.

Elastic elements with contact portions are shown, e.g., in US 2011/0227453 A1. US 6,984,920 B2 discloses a piezoelectric motor using longitudinal mode coupling.

It discloses an arrangement wherein two groups of piezoelectric plates are placed in between two specifically designed elastic elements, one of the elastic elements constituting a shaking beam element and the other one constituting a back support element. When both groups of piezoelectric elements are excited with two sinusoidal signals with a predetermined phase difference, the generated vibration is amplified by the shaking beam element and is transferred to a slider element of the motor through frictional contact.

EP 3 089 348 A1 discloses another piezoelectric motor comprising at least two piezoelectric actuators, wherein each piezoelectric actuator comprises at least two piezoelectric elements arranged at opposite sides of a coupling element. The piezoelectric actuators each comprise oppositely arranged surfaces which have a larger area than the other surfaces of the piezoelectric actuator and which, therefore, are to be designated as large main surfaces. On the large main surfaces, elastic elements are provided which are intended for frictional contact with a motor element to be driven by the piezoelectric actuators.

One of the objectives of the present invention is to propose a vibrator for an ultrasonic motor that has a suitable pre-stress mechanism to protect piezoelectric layers against pill-off. It is another object of the present invention to design a vibrator for an ultrasonic motor with a suitable holding place that allow tight holding of a vibrator in a motor structure. To ensure a high performance from an ultrasonic motor, the vibrator shall be designed so that the highest coupling coefficients in a piezoelectric material is activated, such as thickness mode piezoelectric coupling coefficient (d33), which is a further object of the present invention.

The objects are solved by a piezoelectric vibrator device according to claim 1. Advantageous embodiments of the invention are subject of the dependent claims. Furthermore, the invention provides a new piezoelectric linear motor and piezoelectric rotary motor.

According to an aspect of the invention, the piezoelectric vibrator device comprises a piezoelectric prism or pair of stack of piezoelectric prisms which has two opposing large main surfaces, wherein on each of the large main surfaces at least one metallization electrode is provided for exciting the or each piezoelectric prism or layer of the piezoelectric stack to vibrate in the thickness direction thereof, normal to the opposing large main surfaces, wherein each piezoelectric prism has a uniform polarization directed from the first large main surface to the second large main surface.

Within this disclosure, the device can comprise one or more piezoelectric prism/s and each of them has a uniform or homogeneous "thickness" polarization oriented normal to the large main surfaces. Typically, if the device comprises a pair of such prisms, the polarizations in the two prisms are oppositely directed, and in a stack of such prisms the polarization directions would alternate from prism to prism (or from layer to layer) of the stack. The term "large main surface", as used herein, has a two-fold meaning: When describing the arrangement of electrodes on the or each prism, they designate the respective opposing surfaces of the single prism (or layer).

According to a second aspect of the invention, the vibrator device comprises two elastic coupling elements, one of them arranged on a first large main surface of the piezoelectric prism or pair or stack of piezoelectric prisms, and the other one arranged on the second large main surface, opposite to the first large main surface. As far as describing that aspect of the invention, the term "large main surface", in its second meaning, designates an outermost surface of a pair or stack of piezoelectric prisms.

According to a third aspect of the invention, the vibrator device comprises two convex-shaped friction elements, one of them disposed centrally on each of the free surfaces of the two coupling elements.

According to a fourth aspect of the invention, on one of the large main surfaces (of the or each single piezoelectric prism or piezoelectric layer of a stack, respectively) a continuous electrode is provided which covers the respective large main surface, whereas on the other large main surface two separate electrodes are provided which divide that large main surface into two equally-dimensioned separate excitation portions.

According to an embodiment of the invention, plate electrodes are arranged on at least one of the large main surfaces of the or each piezoelectric prism. In principle, grid or strip-shaped electrode configurations could be provided instead of plate electrodes. More specifically, the plate electrodes comprise lateral and/or longitudinal extension flaps extending beyond at least one edge of the large main surface, for connecting the electrodes to an excitation circuit.

In further embodiments, the piezoelectric prism comprises a multi-layer structure of alternating piezoelectric layers and electrode layers. In a more specific embodiment, such multi-layered piezoelectric prism comprises termination plate electrodes arranged on the side surfaces of the piezoelectric prism, for commonly connecting the electrode layers to an excitation signal source.

In a further embodiment, the elastic coupling elements each comprise an elastomer block. The elastomer block can e.g. be made from a synthetic or natural rubber composition or other elastomer material which is typically used with piezoelectric motors. However, it is also possible that the elastic coupling elements comprise or are made of a metal or an alloy, for example aluminum, copper, brass, bronze or steel.

In further embodiments, in those surfaces of the elastic coupling elements, which interface with the respective adjacent piezoelectric prism, at least one laterally extending recess for improving the longitudinal bendability of the respective element, is provided. In a simple configuration, in those surfaces of the coupling elements which interface with the respective adjacent piezoelectric prism, a single central recess is provided. The or each recess can e.g. have rectangular, trapezoidal, triangular or U-shaped cross-section.

In further embodiments, the elastic coupling elements are each comprised of a central cuboid and identical longitudinal, in particular graded or oblique, extensions and/or lateral extensions, extending beyond the adjacent large main surface of the respective piezoelectric prism. More specifically, the longitudinal or lateral extensions of each of the elastic coupling elements are bent towards the opposite coupling element, such that side surfaces of the opposing extensions are in surface contact with each other and are connected to each other by mechanical connector means and/or an adhesive, such that the opposing coupling elements exert predetermined pressure normally to the large main surfaces of the piezoelectric prism or pair or stack of piezoelectric prisms arranged between the coupling elements.

In a further preferred embodiment, the longitudinal or lateral extensions of each coupling element are provided with through-holes to receive fastening means for fastening the piezoelectric vibrator to a motor case and/or for biasing the opposing coupling elements towards each other, such that the opposing coupling elements exert predetermined pressure normally to the large main surfaces of the piezoelectric prism or pair or stack of piezoelectric prisms arranged between the coupling elements.

In a further embodiment, the elastic coupling elements extend at least over the entire adjacent large main surface of the piezoelectric prism or pair or stack of piezoelectric prisms. However, in principle, the lateral extension of the coupling elements can be smaller than that of the piezoelectric prism or pair or stack of prisms, which is sandwiched between the coupling elements.

In a further embodiment of the invention, the friction elements are shaped as identical portions of a sphere, in particular as semi-spheres. Alternatively, the friction elements are shaped as frustoconicals. Furthermore, it is possible that the friction elements are shaped as truncated prism.

In a further embodiment, the friction elements comprise a ceramic material. In principle, besides ceramic material a polymer or glass-based material can be used for the friction elements.

Besides the above-referenced piezoelectric vibrator device, the invention provides a piezoelectric linear motor, comprising a piezoelectric vibrator device as specified above, mounted in a motor case by fastening means connecting the elastic coupling elements to the motor case and arranging the friction elements in mechanical contact to force transferring elements of the motor.

In a further implementation of the invention, it provides a piezoelectric rotary motor, comprising a circular arrangement of at least three piezoelectric vibrator devices as specified further above, mounted in a motor case by fastening means connecting the coupling elements of each of the piezoelectric vibrator devices to the motor case and arranging the respective friction elements in mechanical contact to force transferring elements of the motor.

At least in certain embodiments of the invention, the following advantages over the prior art piezoelectric vibrator devices can be achieved:
- easy manufacturing,
- reduced number of parts and, therefore, simplified logistics,
- efficient generation of vibrations or resulting motor movements, respectively,
- tight and reliable holding in a piezoelectric motor,
- simplified assembling and de-assembling of corresponding piezoelectric motors.

Below the invention will be described in more detail, referring to advantageous embodiments and aspects thereof as shown in the figures. In the figures,
- Figs. 1A to 1D: show a perspective view, a perspective explosion view and two perspective detail views of a piezoelectric vibrator device according to a first embodiment of the invention,
- Figs. 2A and 2B: show a perspective view and a perspective explosion view of a piezoelectric vibrator device according to another embodiment of the invention,
- Figs. 3A and 3B: show a perspective view and a perspective explosion view of a piezoelectric vibrator device according to another embodiment of the invention,
- Figs. 4A and 4B: show a perspective view and a perspective explosion view of a piezoelectric vibrator device according to another embodiment of the invention,
- Figs. 4C and 4D: a perspective detail view and a corresponding perspective explosion view of the layered piezoelectric prism of the embodiment of Figs. 4A and 4B,
- Figs. 5A and 5B: schematic diagrams of the electrode arrangements and excitation principles of the embodiments of Figs. 2A/2B and 3A/3B on the one hand and the embodiment of Figs. 4A-4D on the other,
- Figs. 6A and 6B: a schematic side view and a detail, respectively, of a modified embodiment of the invention,
- Fig. 7: a perspective view of a piezoelectric linear motor according to a further embodiment of the invention, and
- Fig. 8: a plan view (with removed portions) of a piezoelectric rotary motor according to a further embodiment of the invention.

Throughout of the figures, same or functionally equivalent parts are designated with corresponding reference numerals, and a repeated description thereof will be avoided, as far as possible.

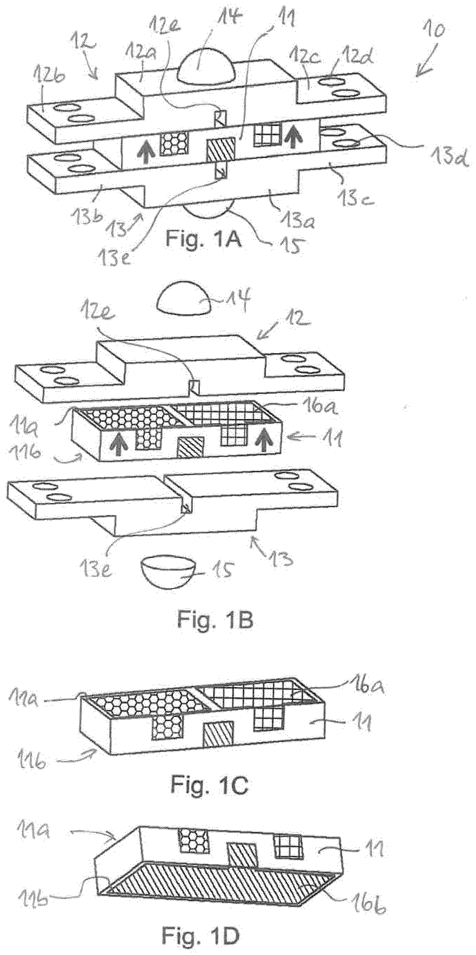

Figs. 1A and 1B show a piezoelectric vibrator 10 which comprises a piezoelectric cuboid 11 having two large main surfaces 11a and 11b (the latter hidden in the figure), two identical elastic coupling elements 12, 13, arranged on the first or second large main surface of the piezoelectric prism 11, respectively, and two semispherical friction elements 14, 15 arranged on the respective free surfaces of the elastic coupling elements 12, 13, on the central cuboid portions thereof. In Figures 1A and 1B the uniform polarization within the piezoelectric prism 11 is symbolized with vertical arrows, and electrodes 26a, 26b provided on the large main surfaces 11a, 11b are shown in Figures 1B to 1D.

The piezoelectric prism 11 has a uniform polarization throughout its volume. On one of its large main surfaces, in figure surface 11a, a metallization electrode structure 16a is provided which includes two separate electrodes (not separately designated) which can separately be excited. On the opposite large main surface, in Figures 1B-1D surface 11b, a continuous metallization electrode 16b is provided as a common electrode. Both metallization electrode structures 16a, 16b comprise extensions or flaps, respectively, which extend onto one of the side surfaces of the prism, to provide for an easy connectability of the respective electrodes. For details of the electrode structures and the functions thereof, please refer to more detailed explanations further below.

The elastic coupling elements 12, 13 can be made of a bulk elastomer and each have a central cuboid portion 12a, 13a and two symmetrical extensions 12b, 12c and 13b, 13c, respectively. Each of the extensions 12b, 12c and 13b, 13c, comprises two through-holes 12d or 13d, respectively, for receiving screws to fix the vibrator device 10 to a motor case and to exert an elastic pressure, oriented normally to both large main surfaces 11a, 11b, onto the piezoelectric prism 11. If the coupling elements are made by using metal based material, an insulating layer made of bonding epoxy material would be provided between the metallization electrodes and the coupling elements, and without the side extensions or flaps of the electrodes it would not be possible to reach the electrodes from above or below, to manage the required excitation. However, conductor wires or PCB contacts can easily be electrically connected to the side extensions of the metallization electrodes.

In those surfaces of the elastic coupling elements 12, 13, which are adjacent to the large main surfaces 11a, 11b of the piezoelectric prism 11, laterally extending grooves 12e, 13e having a rectangular cross-sectional shape are provided, for further improving the inherent longitudinal bendability of the respective coupling element.

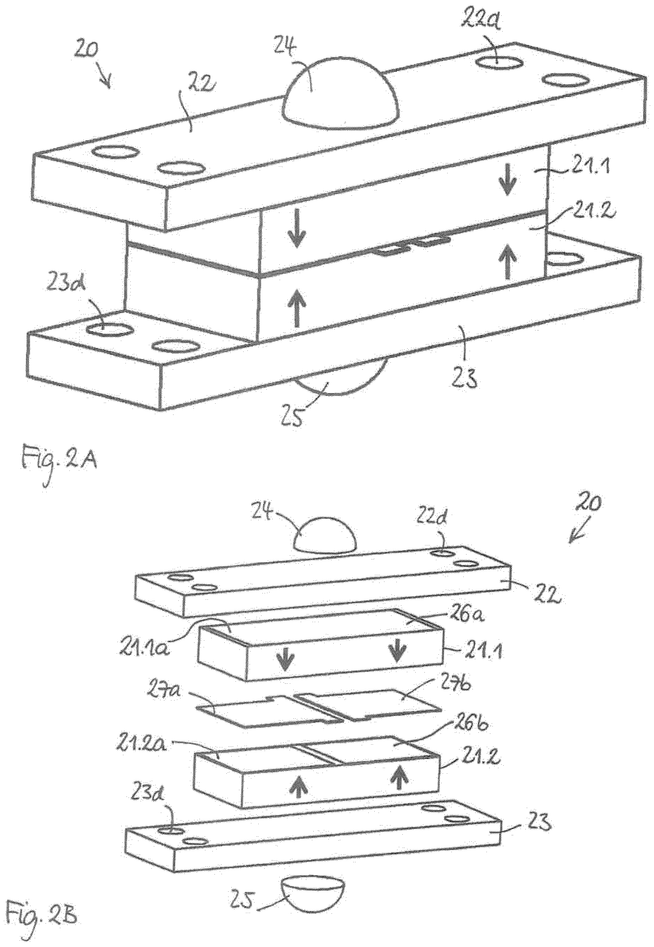

Figs. 2A and 2B show a piezoelectric vibrator device 20, which is very similar to the device shown in Figs. 1A and 1B and described above. A first major difference is, that the device 20 comprises two cuboidal piezoelectric prisms 21.1 and 21.2, which are stacked upon each other and sandwiched together between elastic coupling elements 22 and 23. A second major difference is, that the elastic coupling elements have the simplified shape of a flat cuboid.

In Figs. 2A and 2B the polarization directions of the piezoelectric prisms 21.1, 21.2 are indicated, and it is to be noted that the polarization directions in both prisms are opposite to each other.

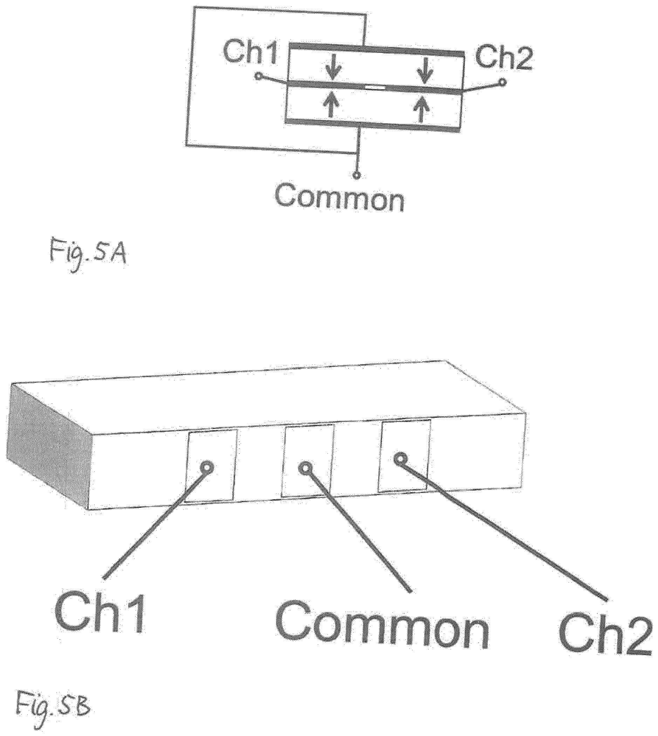

Moreover, in Fig. 2B metallization electrodes on the large main surfaces of the piezoelectric prims are shown, i.e. a metallization electrode 26a fully covering the upper large main surface 21.1a of the pair of piezoelectric prisms 21.1, 21.2, and a different metallization electrode 26b consisting of two separate identical metallization portions (not separately designated) on the internal large main surface 21.2a of the pair of prisms. The hidden metallization electrode on the lower outermost surface of the pair of prisms, i.e. on the bottom surface of the prism 21.2, has the same configuration as the metallization electrode 26a, and the hidden electrode configuration on the bottom surface of the prism 21.1 has the same configuration as the metallization electrode 26b. As to the function of the metallization electrodes, please refer to Fig. 5 and the explanation further below.

Between the piezoelectric prisms 21.1, 21.2 electrode plates 27a, 27b are arranged for separately contacting the respective two-part metallization electrode configurations on the adjacent large main surfaces of the prisms 21.1, 21.2 and providing them with separate excitation signals. The electrode plates 27a, 27b have flaps (not separately designated) which extend beyond the side surfaces of the prisms, for easily connecting the electrode plates 27a, 27b to an external wiring.

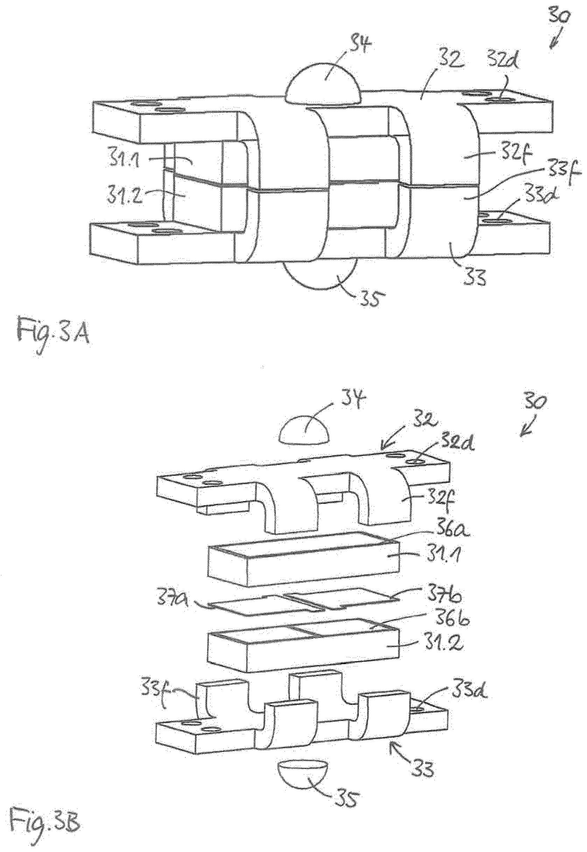

Figs. 3A and 3B show a further piezoelectric vibrator device 30, which is basically a modification of the device 20 shown in Figs. 2A and 2B described above. All parts except the elastic coupling elements are identical to the embodiment of Figs. 2A and 2B and will not be described here. The crucial difference is, that the elastic coupling elements 32, 33 each have four lateral extensions or arms, respectively, which are designated with numerals 32f and 33f, respectively. These extensions are formed as downwardly or upwardly bent arms, such that the arms 32f provided on the coupling element 32 and the arms 33f provided on the coupling element 33 touch each other at the mid plane or horizontal symmetry plane of the device. On their contact surfaces, the arms 32f, 33f are connected to each other by means of an adhesive or solder etc. The vertical dimensions of the arms 32f, 33f are chosen such that in the connected state thereof the elastic coupling elements 32, 33 exert a predetermined stress, normal to the large main surfaces of the prisms, on the pair of piezoelectric prisms 31.1, 31.2.

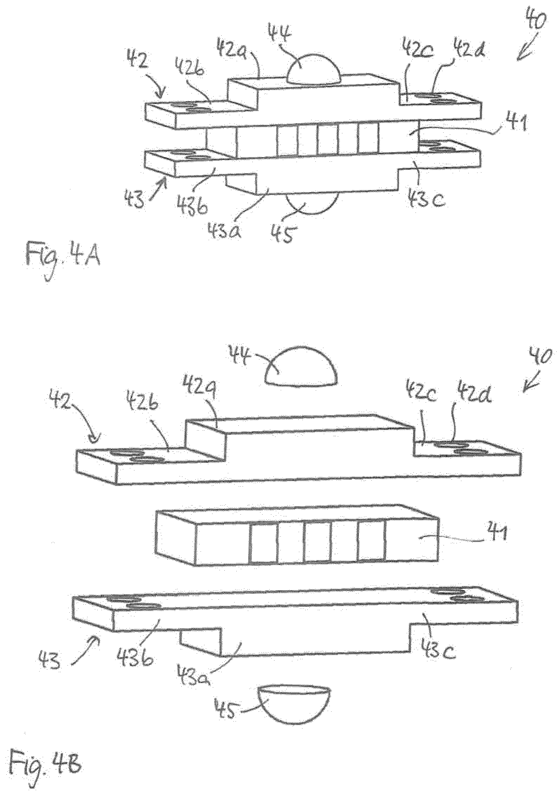

In Figs. 4A and 4B, as a further embodiment of the invention, a piezoelectric vibrator device 40 is shown, the core of which is constituted by a multi-layer piezoelectric prism 41. The multi-layer prism 41, which can also be designated as a stack of (thin) prisms, replaces the bulk piezoelectric prism 11 in Figs. 1A and 1B. The other components of the device 40 are very similar to those of the device 10 in Figs. 1A and 1B, so that we can refer to the corresponding explanations further above.

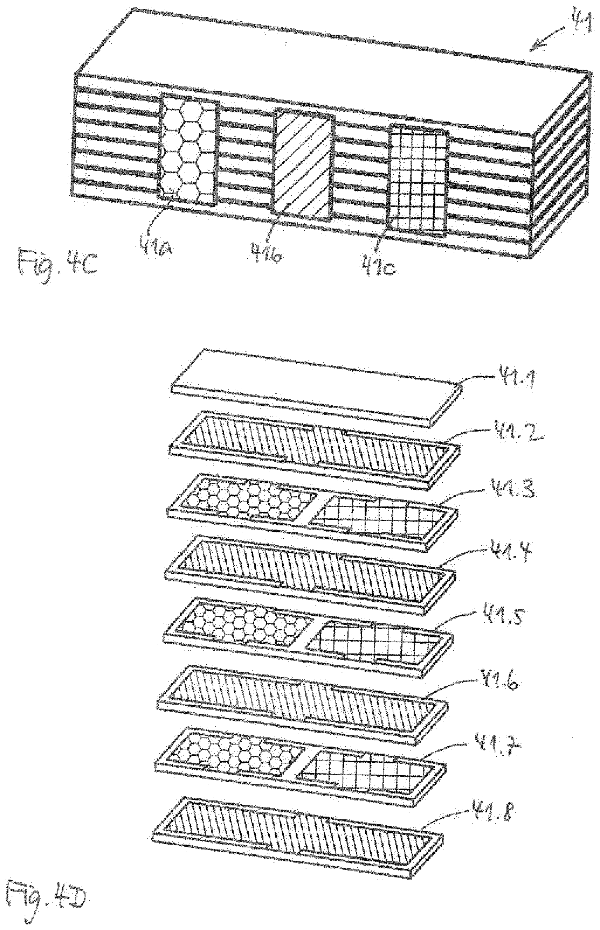

Figs. 4C and 4D illustrate the multi-layer piezoelectric prism 41 in more detail. It is composed of eight rectangular layers or strips, respectively, of piezoelectric material 41.1-41.8, each of which has on one of its large main surfaces a metallization electrode (not separately designated) for exciting the respective homogeneously polarized layer or strip which is in contact with the corresponding electrode/s. In Fig. 4D the different types of excitation in the alternating layers are designated with different symbols on the respective surfaces or surface portions, respectively. The separated metallization in every second layer divides the large main surface thereof into two equal portions for receiving different excitation signals, whereas the uniform metallization on the other layers provides for a respective homogeneous excitation thereof. On the top surface of the first layer 41.1, as well as on the bottom surface of the eighth layer 41.8, no metallization is provided, so that those first and eighth layers are used as kind of "buffer" in the multi-layer prism 41.

As can be seen in Fig. 4C, three side electrodes 41a, 41b, 41c are provided on the side surface of the prism 41 such that they contact the flaps of the respective metallizations which extend to the edge of the respective layer. The surfaces of the electrodes 41a-41c have been filled with the same symbols as the corresponding metallization electrodes in Fig. 4D.

Fig. 5A schematically shows the excitation principle of the two-prism embodiment of Figs. 2A and 2B or Figs. 3A and 3B, respectively, and Fig. 5B shows the electrode connection principle of the multi-layer prism embodiment of Figs. 4A-4D.

In each vibrator, there are two active terminals, which are the two segmented metallization electrodes in between the two piezoelectric prisms, and one common terminal, where the metallization electrodes cover the large main surfaces. When a sinusoidal signal is applied between one of the active terminals and the common terminal, only one side of the two piezoelectric prisms or layers, respectively, is electrically excited. This excitation could create a vibration in thickness direction. Because the electrical signal is applied only one side of the vibrator, vibration amplitude at the excited portion is much larger than the vibration amplitude at the unexcited portion.

One can apply two driving signals with a phase difference of 180 degrees to the vibrator. In this case one signal is applied to one of the active terminals, e.g. Ch1, and the other signal with a phase difference of 180 degrees is applied to the common terminal. Meanwhile the other active terminal (Ch2) is kept free. The direction of the motion could be altered by changing the signal from one active terminal Ch1 to the other active terminal Ch2 and keep the signal with a phase difference of 180 degrees at the common terminal.

Even though, initial vibration on the piezoelectric prisms is in thickness direction, elastic coupling elements that are squeezing the piezoelectric prisms in thickness direction act as an acoustic waveguide. Vibration in thickness direction at the excited sections in the piezoelectric prisms is converted into oblique direction on the friction elements (see Figs. 1A-4B). This oblique vibration has normal and tangential components, which are transferred to a moving element of a motor through frictional coupling.

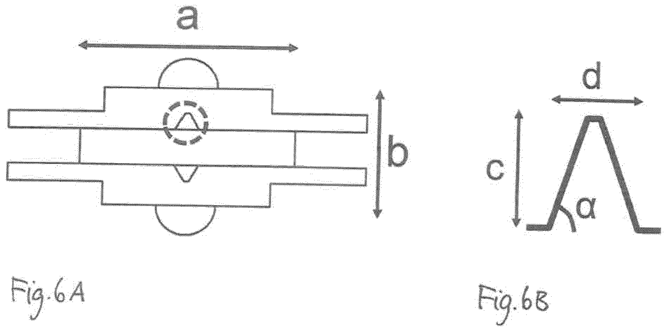

Figs. 6A and 6B show a modification of the piezoelectric vibrator device of Figs. 1A and 1B or that of Figs. 4A-4D, respectively. The modification consists in the provision of a trapezoidal or triangular notch or recess in the elastic coupling elements, respectively, positioned in the vertical symmetry plane there. This notch serves for the same purpose as the recess 13e in the first embodiment (Fig. 1B) but further optimizes the oblique motion in normal and tangential directions of the friction element and relieves stress on the piezoelectric prism enclosed between the coupling elements.

In Fig. 6A the critical dimensions of a piezoelectric vibrator device according to some embodiments of the invention, i.e. the length of the piezoelectric prism and the thickness of the prism/elastic coupling element sandwich between the outermost surfaces thereof, are designated with "a" and "b", respectively. In advantageous implementations, the ratio a/b is in the range between 1.3 and 1.8.

In Fig. 6B the relevant dimensions of the notch in the elastic coupling elements, i.e. the depth and base width thereof, are designated with "c" and "d", respectively, and the angle between the sidewalls of the notch and the base thereof is designated with "α". In advantageous embodiments, the ratio c/d is about half of the total thickness of the central portion of the elastic coupling element, and the angle α is in the range between 45 and 120 degrees.

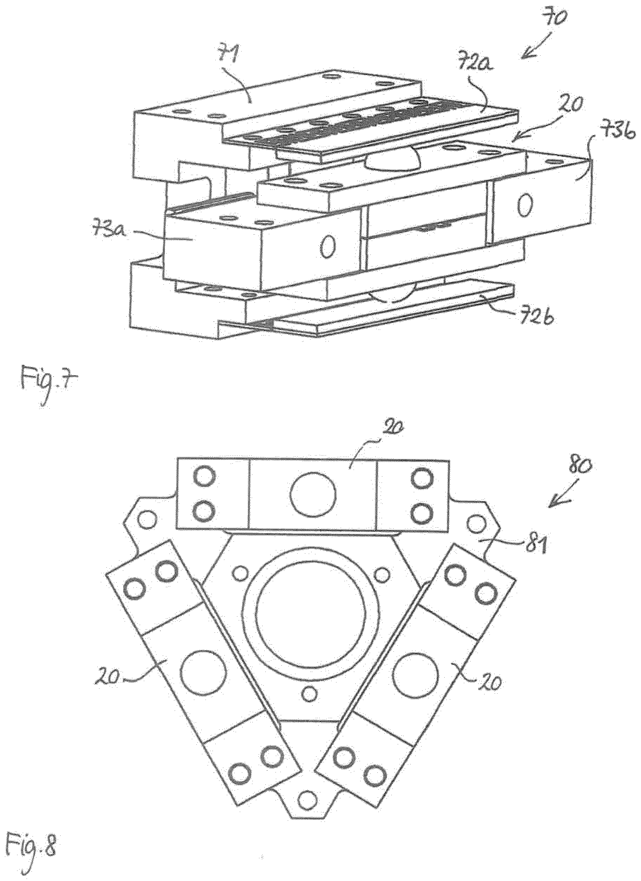

Fig. 7 shows a piezoelectric linear motor 70 comprising an embodiment of the piezoelectric vibrator device according to the invention, i.e. the vibrator device of Fig. 2A and 2B. The parts of the vibrator device 20 are not designated in Fig. 7, in this regard, please refer to Figs. 2A and 2B.

The motor 70 has a motor case 71 and a slider, which comprises two plate-shaped force transferring elements 72a, 72b. Between the outermost end portions of the elastic coupling elements of the vibrator device 20 case mounting blocks 73a, 73b are fixed to the elastic coupling elements, and the case mounting blocks 73a, 73b are fastened to the motor case 71. The friction elements of the vibrator device 20 are in mechanical contact with the force transferring elements 72a, 72b of the motor with pre-stress from both sides of the vibrator device and transfer the oblique motions of the excited vibrator device to the slider of the motor.

Fig. 8 schematically illustrates how three vibrator devices 20 can be arranged in a motor case 81 of a piezoelectric rotary motor 80. Analogously to the linear motor configuration shown in Fig. 7, it is to be imagined that the respective friction elements of the piezoelectric vibrator devices 20 each are in pre-biased mechanical contact to upper and lower rotary discs (not shown) as forced transferring elements of the rotatory motor 80.

The above-mentioned embodiments and aspects of the invention are merely illustrative and not determined to restrict the scope of the invention. Any combinations and modifications of those embodiments which are within the scope of the appended claims shall be considered as belonging to the present invention.

## Claims

1. Piezoelectric vibrator device (10; 20; 30; 40), comprising:
a piezoelectric prism or pair or stack of piezoelectric prisms (11; 21.1, 21.2) which has two opposing large main surfaces (11a, 11b; 21.1a, 21.2a), wherein on each of the large main surfaces at least one metallization electrode (16a, 16b; 26a, 26b; 36a, 36b) is provided for exciting the or each piezoelectric prism or layer of the piezoelectric stack to vibrate in the thickness direction thereof, normal to the opposing large main surfaces, wherein each piezoelectric prism has a uniform polarization directed from the first large main surface to the second large main surface,
two elastic coupling elements (12, 13; 22, 23; 32, 33; 42, 43), one of them arranged on a first large main surface of the piezoelectric prism or pair or stack of piezoelectric prisms, and the other one arranged on the second large main surface, opposite to the first large main surface, and two convex-shaped friction elements (14, 15; 24, 25; 34, 35; 44, 45), one of them disposed centrally on each of the free surfaces of the two coupling elements,
wherein on one of the large main surfaces a continuous electrode (16b; 26a; 36a) is provided which covers the respective large main surface, whereas on the other large main surface two separate electrodes (16a; 26b; 36b) are provided which divide that large main surface into two equally-dimensioned excitation portions.

2. Piezoelectric vibrator device of claim 1, wherein plate electrodes (27a, 27b; 37a, 37b) are arranged on at least one of the large main surfaces of the or each piezoelectric prism (21; 31).

3. Piezoelectric vibrator device of claim 2, wherein the plate electrodes (27a, 27b; 37a, 37b) comprise lateral and/or longitudinal extension flaps extending beyond at least one edge of the large main surface, for connecting the electrodes to an excitation signal source.

4. Piezoelectric vibrator device of one of the preceding claims, wherein the piezoelectric prism (41) comprises a multi-layer structure of alternating piezoelectric layers (41.1 - 41.8) and electrode layers.

5. Piezoelectric vibrator device of claim 4, wherein the piezoelectric prism comprises termination plate electrodes (41a-c) arranged on the side surfaces of the piezoelectric prism (41), for commonly connecting the electrode layers to an excitation signal source.

6. Piezoelectric vibrator device of one of the preceding claims, wherein the elastic coupling elements (12, 13; 22, 23; 32, 33; 42, 43) each comprise an elastomer block and/or a metallic material.

7. Piezoelectric vibrator device of one of the preceding claims, wherein in those surfaces of the elastic coupling elements (12, 13), which interface with the respective adjacent piezoelectric prism (11; 21.1, 21.2), at least one laterally extending recess (12e, 13e) for improving the longitudinal bendability of the respective element, is provided.

8. Piezoelectric vibrator device of claim 7, wherein in those surfaces of the elastic coupling elements (12, 13) which interface with the respective adjacent piezoelectric prism (11; 21.1, 21.2), a single central recess (12e, 13e) is provided.

9. Piezoelectric vibrator device of one of the preceding claims, wherein the elastic coupling elements (12, 13; 32, 33; 42, 43) are each comprised of a cuboid (12a, 13a; 42a, 43a) and identical longitudinal, in particular graded or oblique, extensions (12b, 12c, 13b, 13c; 42b, 42c, 43b, 43c) and/or lateral extensions (32f, 33f), extending beyond the adjacent large main surface of the respective piezoelectric prism (11; 31.1, 31.2; 41).

10. Piezoelectric vibrator device of claim 9, wherein the longitudinal or lateral extensions (32f, 33f) of each of the elastic coupling elements (32, 33) are bent towards the opposite coupling element, such that side surfaces of the opposing extensions are in surface contact with each other and are connected to each other by mechanical connector means and/or an adhesive, such that the opposing coupling elements exert predetermined pressure normally to the large main surfaces of the piezoelectric prism (31) or pair or stack of piezoelectric prisms arranged between the coupling elements.

11. Piezoelectric vibrator device of claim 9 or 10, wherein the longitudinal or lateral extensions (12b, 12c, 13b, 13c; 42b, 42c, 43b, 43c) of each elastic coupling element (12, 13; 42, 43) are provided with through-holes to receive fastening means for fastening the piezoelectric vibrator to a motor case and for biasing the opposing coupling elements towards each other, such that the opposing coupling elements exert predetermined pressure normally to the large main surfaces of the piezoelectric prism (11) or pair or stack (41) of piezoelectric prisms arranged between the coupling elements.

12. Piezoelectric vibrator device of one of the preceding claims, wherein the elastic coupling elements (12, 13; 22, 23; 32, 33; 42, 43) extend at least over the entire adjacent large main surface of the piezoelectric prism or pair or stack of piezoelectric prisms (11; 21.1, 21.2).

13. Piezoelectric vibrator device of one of the preceding claims, wherein the friction elements (14, 15; 24, 25; 34, 35; 44, 45) are shaped as identical portions of a sphere, in particular as semi-spheres.

14. Piezoelectric vibrator device of one of claims 1-12, wherein the friction elements are shaped as frustoconicals or as truncated prism.

15. Piezoelectric vibrator device of one of the preceding claims, wherein the friction elements (14, 15; 24, 25; 34, 35; 44, 45) comprise a ceramic material.

16. Piezoelectric linear motor (70), comprising a piezoelectric vibrator device (20) of one of the preceding claims, mounted in a motor case (71) by fastening means (73a, 73b) connecting the elastic coupling elements to the motor case and arranging the friction elements in mechanical contact to force transferring elements (72a, 72b) of the motor.

17. Piezoelectric rotary motor (8c), comprising a circular arrangement of at least three piezoelectric vibrator devices (20) of one of claims 1-15, mounted in a motor case (81) by fastening means connecting the coupling elements of each of the piezoelectric vibrator devices to the motor case and arranging the respective friction elements in mechanical contact to force transferring elements of the motor.

## Patentansprüche

1. Piezoelektrische Vibratorvorrichtung (10 ; 20 ; 30 ; 40), umfassend:
ein piezoelektrisches Prisma oder ein Paar oder einen Stapel piezoelektrischer Prismen (11; 21.1, 21.2), das bzw. die zwei gegenüberliegende große Hauptflächen (11a, 11b; 21.1a, 21.2a) hat bzw. haben, wobei auf jeder der großen Hauptflächen mindestens eine Metallisierungselektrode (16a, 16b; 26a, 26b; 36a, 36b) vorgesehen ist, um das oder jedes piezoelektrische Prisma oder die oder jede Schicht des piezoelektrischen Stapels anzuregen, in seiner bzw. ihrer Dickenrichtung senkrecht zu den gegenüberliegenden großen Hauptflächen zu vibrieren, wobei jedes piezoelektrische Prisma eine von der ersten großen Hauptfläche zur zweiten großen Hauptfläche gerichtete gleichmäßige Polarisierung hat,
zwei elastische Kopplungselemente (12, 13; 22, 23; 32, 33; 42, 43), wovon eines davon auf einer ersten großen Hauptfläche des piezoelektrischen Prismas oder dem Paar oder Stapel von piezoelektrischen Prismen angeordnet ist, und das andere auf der zweiten großen Hauptfläche, der ersten großen Hauptfläche gegenüberliegend angeordnet ist, und
zwei konvex geformte Reibungselemente (14, 15; 24, 25; 34, 35; 44, 45), wovon eines davon zentral auf jeder der freien Flächen der zwei Kopplungselemente angeordnet ist,
wobei auf einer der großen Hauptflächen eine durchgehende Elektrode (16b; 26a; 36a) vorgesehen ist, welche die jeweilige große Hauptfläche bedeckt, wohingegen auf der anderen großen Hauptfläche zwei separate Elektroden (16a; 26b; 36b) vorgesehen sind, die diese große Hauptfläche in zwei gleich dimensionierte Anregungsabschnitte unterteilen.

2. Piezoelektrische Vibratorvorrichtung nach Anspruch 1, wobei Plattenelektroden (27a, 27b; 37a, 37b) auf mindestens einer der großen Hauptflächen des oder jedes piezoelektrischen Prismas (21; 31) angeordnet sind.

3. Piezoelektrische Vibratorvorrichtung nach Anspruch 2, wobei die Plattenelektroden (27a, 27b; 37a, 37b) Seiten- und/oder Längserstreckungslaschen umfassen, die sich über mindestens einen Rand der großen Hauptfläche hinaus erstrecken, um die Elektroden an eine Anregungssignalquelle anzuschließen.

4. Piezoelektrische Vibratorvorrichtung nach einem der vorhergehenden Ansprüche, wobei das piezoelektrische Prisma (41) eine Mehrschichtstruktur aus abwechselnden piezoelektrischen Schichten (41.1 - 41.8) und Elektrodenschichten umfasst.

5. Piezoelektrische Vibratorvorrichtung nach Anspruch 4, wobei das piezoelektrische Prisma Abschlussplattenelektroden (41a-c) umfasst, die an den Seitenflächen des piezoelektrischen Prismas (41) angeordnet sind, um die Elektrodenschichten gemeinsam an eine Anregungssignalquelle anzuschließen.

6. Piezoelektrische Vibratorvorrichtung nach einem der vorhergehenden Ansprüche, wobei die elastischen Kopplungselemente (12, 13; 22, 23; 32, 33; 42, 43) jeweils einen Elastomerblock und/oder ein Metallmaterial umfassen.

7. Piezoelektrische Vibratorvorrichtung nach einem der vorhergehenden Ansprüche, wobei in denjenigen Flächen der elastischen Kopplungselemente (12, 13), die das jeweilige angrenzende piezoelektrische Prisma (11; 21.1, 21.2) berühren, mindestens eine sich seitlich erstreckende Ausnehmung (12e, 13e) zum Verbessern der Längsbiegbarkeit des jeweiligen Elements vorgesehen ist.

8. Piezoelektrische Vibratorvorrichtung nach Anspruch 7, wobei in denjenigen Flächen der elastischen Kopplungselemente (12, 13), die das jeweilige angrenzende piezoelektrische Prisma (11; 21.1, 21.2) berühren, eine einzelne, zentrale Ausnehmung (12e, 13e) vorgesehen ist.

9. Piezoelektrische Vibratorvorrichtung nach einem der vorhergehenden Ansprüche, wobei die elastischen Kopplungselemente (12, 13; 32, 33; 42, 43) jeweils aus einem Quader (12a, 13a; 42a, 43a) und gleichen längsverlaufenden, insbesondere gestuften oder schrägen Verlängerungen (12b, 12c, 13b, 13c; 42b, 42c, 43b, 43c) und/oder seitlichen Verlängerungen (32f, 33f) bestehen, die sich über die angrenzende große Hauptfläche des jeweiligen piezoelektrische Prismas (11; 31.1, 31.2; 41) hinaus erstrecken.

10. Piezoelektrische Vibratorvorrichtung nach Anspruch 9, wobei die längsverlaufenden oder seitlichen Verlängerungen (32f, 33f) jedes der elastischen Kopplungselemente (32, 33) zum gegenüberliegenden Kopplungselement hin derart gebogen sind, dass Seitenflächen der gegenüberliegenden Verlängerungen in Oberflächenkontakt miteinander sind und durch mechanische Verbindereinrichtungen und/oder einen Klebstoff miteinander verbunden sind, so dass die gegenüberliegenden Kopplungselemente einen vorbestimmten Druck senkrecht zu den großen Hauptflächen des piezoelektrischen Prismas (31) oder des Paars oder Stapels der piezoelektrischen Prismen ausüben, das bzw. die zwischen den Kopplungselementen angeordnet ist bzw. sind.

11. Piezoelektrische Vibratorvorrichtung nach Anspruch 9 oder 10, wobei die längsverlaufenden oder seitlichen Verlängerungen (12b, 12c, 13b, 13c; 42b, 42c, 43b, 43c) jedes elastischen Kopplungselements (12, 13; 42, 43) mit Durchgangsbohrungen zur Aufnahme von Befestigungsmitteln versehen sind, um den piezoelektrischen Vibrator an einem Motorgehäuse zu befestigen und die gegenüberliegenden Kopplungselemente aufeinander zu vorzuspannen, und zwar derart, dass die gegenüberliegenden Kopplungselemente einen vorbestimmten Druck senkrecht zu den großen Hauptflächen des piezoelektrischen Prismas (31) oder des Paars oder Stapels (41) der piezoelektrischen Prismen ausüben, das bzw. die zwischen den Kopplungselementen angeordnet ist bzw. sind.

12. Piezoelektrische Vibratorvorrichtung nach einem der vorhergehenden Ansprüche, wobei sich die elastischen Kopplungselemente (12, 13; 22, 23; 32, 33; 42, 43) zumindest über die gesamte angrenzende große Hauptfläche des piezoelektrischen Prismas oder des Paars oder Stapels der piezoelektrischen Prismen (11; 21.1, 21.2) erstrecken.

13. Piezoelektrische Vibratorvorrichtung nach einem der vorhergehenden Ansprüche, wobei die Reibungselemente (14, 15; 24, 25; 34, 35; 44, 45) als identische Abschnitte einer Kugel, insbesondere als Halbkugeln geformt sind.

14. Piezoelektrische Vibratorvorrichtung nach einem der Ansprüche 1 bis 12, wobei die Reibungselemente als Kegelstumpfformen oder als kegelstumpfartiges Prisma geformt sind.

15. Piezoelektrische Vibratorvorrichtung nach einem der vorhergehenden Ansprüche, wobei die Reibungselemente (14, 15; 24, 25; 34, 35; 44, 45) ein keramisches Material umfassen.

16. Piezoelektrischer Linearmotor (70), umfassend eine piezoelektrische Vibratorvorrichtung (20) nach einem der vorhergehenden Ansprüche, die in einem Motorgehäuse (71) mittels Befestigungsmitteln (73a, 73b) befestigt sind, welche die elastischen Kopplungselemente an das Motorgehäuse anschließen und die Reibungselemente in mechanischem Kontakt zu Kraftübertragungselementen (72a, 72b) des Motors anordnen.

17. Piezoelektrischer Drehmotor (8c), umfassend eine kreisförmige Anordnung von mindestes drei piezoelektrischen Vibratorvorrichtungen (20) nach einem der Ansprüche 1 bis 15, die in einem Motorgehäuse (81) mittels Befestigungsmitteln befestigt sind, welche die Kopplungselemente jeder der piezoelektrischen Vibratorvorrichtungen an das Motorgehäuse anschließen und die jeweiligen Reibungselemente in mechanischem Kontakt zu Kraftübertragungselementen des Motors anordnen.

## Revendications

1. Dispositif vibrateur piézoélectrique (10 ; 20 ; 30 ; 40), comprenant :
un prisme piézoélectrique ou une paire ou pile de prismes piézoélectriques (11 ; 21.1, 21.2) qui présente deux grandes surfaces principales opposées (11a, 11b ; 21.1a, 21.2a), dans lequel au moins une électrode de métallisation (16a, 16b ; 26a, 26b ; 36a, 36b) est prévue sur chacune des grandes surfaces principales pour exciter la vibration du prisme piézoélectrique ou de chaque couche piézoélectrique de la pile piézoélectrique dans la direction de son épaisseur, perpendiculairement aux grandes surfaces principales opposées, chaque prisme piézoélectrique ayant une polarisation uniforme dirigée de la première grande surface principale vers la seconde grande surface principale,
deux éléments d'accouplement élastique (12, 13 ; 22, 23 ; 32, 33 ; 42, 43), dont l'un est disposé sur une première grande surface principale du prisme piézoélectrique ou de la paire ou pile de prismes piézoélectriques et l'autre est disposé sur la seconde grande surface principale, opposée à la première grande surface principale, et deux éléments de friction de forme convexes (14, 15 ; 24, 25 ; 34, 35 ; 44, 45), dont l'un est disposé au centre sur chacune des surfaces libres des deux éléments d'accouplement,
dans lequel, sur l'une des grandes surfaces principales est prévue une électrode continue (16b ; 26a ; 36a) qui couvre la grande surface principale respective, tandis que sur l'autre grande surface principale sont prévues deux électrodes séparées (16a ; 26b ; 36b) qui divisent cette grande surface principale en deux parties d'excitation de dimensions égales.

2. Dispositif vibrateur piézoélectrique selon la revendication 1, dans lequel des électrodes en plaque (27a, 27b ; 37a, 37b) sont disposées sur au moins une des grandes surfaces principales du ou de chaque prisme piézoélectrique (21 ; 31).

3. Dispositif vibrateur piézoélectrique selon la revendication 2, dans lequel les électrodes en plaque (27a, 27b ; 37a, 37b) comprennent des volets de prolongement latéraux et/ou longitudinaux qui s'étendent au-delà d'au moins un bord de la grande surface principale pour relier les électrodes à une source de signal d'excitation.

4. Dispositif vibrateur piézoélectrique selon l'une des revendications précédentes, dans lequel le prisme piézoélectrique (41) comprend une structure multicouche de couches piézoélectriques (41.1 - 41.8) et de couches d'électrodes alternées.

5. Dispositif vibrateur piézoélectrique selon la revendication 4, dans lequel le prisme piézoélectrique comprend des électrodes en plaque de terminaison (41a-c) disposées sur les surfaces latérales du prisme piézoélectrique (41), pour relier en commun les couches d'électrodes à une source de signal d'excitation.

6. Dispositif vibrateur piézoélectrique selon l'une des revendications précédentes, dans lequel les éléments d'accouplement élastique (12, 13 ; 22, 23 ; 32, 33 ; 42, 43) comprennent chacun un bloc élastomère et/ou un matériau métallique.

7. Dispositif vibrateur piézoélectrique selon l'une des revendications précédentes, **caractérisé en ce qu'**au moins un évidement s'étendant latéralement (12e, 13e) est prévu dans les surfaces des éléments d'accouplement élastique (12, 13) qui assurent l'interface avec le prisme piézoélectrique adjacent respectif (11 ; 21.1, 21.2) pour améliorer l'aptitude à la courbure longitudinale de l'élément respectif.

8. Dispositif vibrateur piézoélectrique selon la revendication 7, dans lequel un seul évidement central (12e, 13e) est prévu dans les surfaces des éléments d'accouplement élastique (12, 13) qui assurent l'interface avec le prisme piézoélectrique adjacent respectif (11 ; 21.1, 21.2).

9. Dispositif vibrateur piézoélectrique selon l'une des revendications précédentes, dans lequel les éléments d'accouplement élastique (12, 13 ; 32, 33 ; 42, 43) sont constitués chacun d'un cuboïde (12a, 13a ; 42a, 43a) et de prolongements longitudinaux, en particulier inclinés ou obliques (12b, 12c, 13b, 13c ; 42b, 42c, 43b, 43c) et/ou de prolongements latéraux (32f, 33f), identiques, qui s'étendent au-delà de la grande surface principale adjacente du prisme piézoélectrique respectif (11, 31.1, 31.2 ; 41).

10. Dispositif vibrateur piézoélectrique selon la revendication 9, dans lequel les prolongements longitudinaux ou latéraux (32f, 33f) de chacun des éléments d'accouplement élastique (32, 33) sont courbées vers l'élément d'accouplement opposé, de sorte que les surfaces latérales des prolongements opposés sont en contact de surface les unes avec les autres et sont reliées les unes aux autres par un connecteur mécanique et/ou un adhésif, de sorte que les éléments d'accouplement opposés exercent une pression prédéterminée perpendiculairement aux grandes surfaces principales du prisme (31) ou de la paire ou pile de prismes piézoélectriques disposé(e) entre les éléments d'accouplement.

11. Dispositif vibrateur piézoélectrique selon la revendication 9 ou 10, dans lequel les prolongements longitudinaux ou latéraux (12b, 12c, 13b, 13c ; 42b, 42c, 43b, 43c) de chaque élément d'accouplement élastique (12, 13 ; 42, 43) sont munis de trous traversants pour recevoir des moyens de fixation pour fixer le vibrateur piézoélectrique à un carter de moteur et pour solliciter les éléments d'accouplement opposés l'un vers l'autre, de sorte que les éléments d'accouplement opposés exercent une pression prédéterminée perpendiculairement aux grandes surfaces principales du prisme piézoélectrique (11) ou de la paire ou pile (41) de prismes piézoélectriques disposé(e) entre les éléments d'accouplement.

12. Dispositif vibrateur piézoélectrique selon l'une des revendications précédentes, dans lequel les éléments d'accouplement élastique (12, 13 ; 22, 23 ; 32, 33 ; 42, 43) s'étendent au moins sur toute la grande surface principale adjacente du prisme piézoélectrique ou de la paire ou pile de prismes piézoélectriques (11 ; 21.1, 21.2).

13. Dispositif vibrateur piézoélectrique selon l'une des revendications précédentes, dans lequel les éléments de friction (14, 15 ; 24, 25 ; 34, 35 ; 44, 45) sont réalisés sous la forme de parties identiques d'une sphère, en particulier sous la forme de demi-sphères.

14. Dispositif vibrateur piézoélectrique selon l'une des revendications 1 à 12, dans lequel les éléments de friction sont réalisés en forme de tronc de cône ou de prisme tronqué.

15. Dispositif vibrateur piézoélectrique selon l'une des revendications précédentes, dans lequel les éléments de friction (14, 15 ; 24, 25 ; 34, 35 ; 44, 45) comprennent un matériau céramique.

16. Moteur linéaire piézoélectrique (70), comprenant un dispositif vibrateur piézoélectrique (20) selon l'une des revendications précédentes, monté dans un carter de moteur (71) par des moyens de fixation (73a, 73b) reliant les éléments d'accouplement élastique au carter de moteur et disposant les éléments de friction en contact mécanique avec des éléments de transfert de force (72a, 72b) du moteur.

17. Moteur rotatif piézoélectrique (8c), comprenant un agencement circulaire d'au moins trois dispositifs vibrateurs piézoélectriques (20) selon l'une des revendications 1 à 15, monté dans un carter de moteur (81) par des moyens de fixation reliant les éléments d'accouplement de chacun des dispositifs vibrateurs piézoélectriques au carter de moteur et disposant les éléments de friction respectifs en contact mécanique avec des éléments de transfert de force du moteur.
